# EUROPEAN PATENT SPECIFICATION

(11) **EP 2 922 272 B1**
(45) Date of publication and mention of the grant of the patent: **18.03.2020**
(21) Application number: 13855200.5
(22) Date of filing: 13.11.2013
(51) Int. Cl.: G06F 8/61, H04W 4/60, G06F 16/955, G06F 16/11, G06F 16/9535, G06F 16/17, G06F 16/178, H04L 29/08

(54) **DATA SYNCHRONIZATION METHOD, DATA SYNCHRONIZATION SERVER AND DATA SYNCHRONIZATION SYSTEM**
DATENSYNCHRONISATIONSVERFAHREN, DATENSYNCHRONISATIONSSERVER UND DATENSYNCHRONISATIONSSYSTEM
PROCÉDÉ DE SYNCHRONISATION DE DONNÉES, SERVEUR DE SYNCHRONISATION DE DONNÉES ET SYSTÈME DE SYNCHRONISATION DE DONNÉES

(30) Priority: 16.11.2012 CN 201210464751
(43) Date of publication of application: 23.09.2015
(73) Proprietor: China Mobile Communications Corporation, Beijing 100032 (CN)
(72) Inventor: YANG, Bo, Beijing 100032 (CN); WU, Wei, Beijing 100032 (CN)
(74) Representative: Epping - Hermann - Fischer
(86) International application number: PCT/CN2013/086999
(87) International publication number: WO 2014/075606

(56) References cited:
- WO-A1-2008/109291
- CN-A- 101 674 314
- CN-A- 101 888 395
- CN-A- 101 958 914
- US-A1- 2006 048 141
- US-A1- 2008 215 758
- US-A1- 2009 163 244
- US-A1- 2012 079 095
- US-A1- 2012 272 232

## Description

This application claims priority to Chinese Patent Application No. 201210464751.X, entitled "Data synchronization method and system, data synchronization server, and terminal", and filed with the State Intellectual Property Office of People's Republic of China on November 16, 2012.

### Field

The present disclosure relates to the field of data services and particularly to a data synchronization method, a data synchronization server, and a data synchronization system.

### Background

Mobile terminals are currently widely applied personal information processing and communication devices, and ordinary mobile terminals include handsets, PADs, notebook, computers capable of accessing the Internet, etc.

For the sake of convenient use, a user typically stores on a mobile terminal various user data, e.g., an address book, a schedule, a notebook, a media database, a playlist, downloaded/installed applications, themes and wallpapers downloaded to the terminal, etc.

Due to the difference of platforms, models, operating systems, etc., between the terminals, the user data are typically stored in different formats, and when the user replaces one of the terminals or use these terminals concurrently, contents and data on the different terminals may be different. For example, after the user sets a specific ring tone (ringing) of an incoming call for some contact in the address book on the handset A, the setting will be lost when the user uses the handset B instead.
A US patent application of publication no. US 2008/215758 A1 discloses a method for synchronizing one or more software programs from a first device to a second device. The method comprises the steps of creating an application profile indicating one or more software programs on the first device and indicating one or more software program providing nodes from which said one or more software programs are obtainable, providing the application profile to a synchronization manager, identifying by the synchronization manager the one or more software programs and the one or more software program providing nodes according to the application profile, requesting by the synchronization manager the one or more software program providing nodes; to transfer the one or more software programs, and transferring the one or more software programs from the one or more software program providing nodes.
A US patent application of publication no. US 2006/048141 A1 discloses a method and corresponding equipment by which software on a first device is virally or otherwise distributed to a second device, in which the first device and second device and possibly also a server of the software exchange information sufficient for the first device to determine whether it includes or stores a version of the software compatible with the second device, and if so, then provides a compatible version, but otherwise exchanges information with the second device sufficient for the second device to obtain a copy from the server.
A US patent application of publication no. US 2012/079095 A1 discloses a logically centralized system or service, such as a cloud-based content management service, enables intelligent communication between disparate devices. Such communication enables content such as applications and data to be synchronized between various devices, where the synchronization takes into account the capabilities of each device to provide versions and/or formats of that content that are appropriate for each device. A user purchasing an additional device, for example, can have various applications and other content automatically installed or copied over to the additional device, but with versions or formats that take advantage of, and are appropriate for, the capabilities of that additional device. Further, the intelligent communication via a logically centralized service can enable such devices to interact even though those devices might utilize different protocols and/or formats, and might otherwise not be able to communicate or have ever have been tested together.

At present, a number of application providers personal cloud storage services, e.g., Apple iCloud, Google Drive, DropBox, etc. Apple iCloud and Google Drive provide iPhone and Android handsets respectively with user data backup functions; and DropBox can synchronize a specific folder according to the requirement of the user.

At present, the SyncML protocol has been defined by the International Standardization Organization, OMA, to provide an effective data synchronization mechanism suitable for data migration between mobile terminals. With the OMA SyncML protocol, a number of terminals can synchronize their address books, schedules, user notebooks and other fundamental information. The user can initiate synchronization on his or her own operation, or one of the terminals or the network can initiate a synchronization request according to a predefined trigger condition. The user data will be stored on another device (e.g., a mobile terminal, a network server, etc.) upon successful synchronization.

At present there are a number of online application download shops for mobile communication terminals (e.g., Apple App Store, Google Play, Microsoft Store, etc.), and the user can purchase and download a application corresponding to characteristics of his or her terminal (e.g., software and hardware characteristics, the type and the version of the operating system, etc.) at these shops accordingly and install the applications on his or her mobile terminal for use. However, the user, replacing his or her terminal or upgrading the operating system of the terminal, typically cannot continue his or her use of the purchased application which is still in an authorized valid time, and includes user data (e.g., a use record, a game progression, a reading bookmark, etc.)

As demonstrated above, the existing mechanism of synchronizing user data suffers from the following problems.
(1) only the most fundamental information is synchronized, for example, an address book is synchronized by synchronizing only the name and the phone number of a contact without synchronizing any alarm of an incoming call associated with the contact, so the user replacing his or her terminal has to download or set the information again, thus discouraging the user from replacing his or her terminal;
(2) Terminal platform-specific multimedia contents may not be used across platforms, for example, the user purchases a handset ring tone file (in the mp3 format) onto an Android handset, and synchronizes the ring tone file to DropBox, and further synchronizes the ring tone file from DropBox to an iPhone handset, but the ring tone file can not be used as a ring tone of an incoming call;
(3) A terminal platform-specific application may not be used across platforms, different physical characteristics of terminals (e.g., resolutions, screen sizes, etc.) and different versions of the same operating system, for example, the user purchases a game in an electronic market through an Android 1.5 handset, and if the user replaces the handset with an Android 4.0 handset, then he or she still has to purchase, download and install again the game for further use of the game;
(4) The existing network backup and synchronization mechanism requires a large amount of data to be communicated and contents to be transmitted with the data synchronization server or another terminal, and in the existing 2G/3G radio environment, the synchronization function will significantly consume an amount of data and battery power of the terminal, thus resulting a high use cost; and
(5) Various personalized setting information of the user can not be migrated across terminals, for example, a screensaver of the user, a play list of the user, etc., can not be migrated across platforms, terminals, operating system, etc.

In summary, the existing services of synchronization between the mobile terminals synchronizes only the fundamental data and can not accommodate correct migration of the user data across the terminals and the platforms, thus resulting in high cost, complicated operations, high communication fee and a time-consuming synchronization process of the user for replacing his or her terminal, which may greatly degrade the experience of the user and the integrity of the service.

### Summary

The invention is defined by a data synchronization method according to claim 1, a data synchronization server according to claim 2, and a data synchronization system according to claim 3.

With the data synchronization method, the data synchronization server, and the data synchronization system according to the present disclosure, the content server determines the source of the corresponding digital contents according to the summary information uploaded by the user, and determines that only the summary information is stored or further the storage location information of the digital contents or the digital contents are stored, according to the source of the digital contents, to thereby reduce the amount of data to be backed up, so as to simplify migration of the data when the user replaces the terminal, and to reduce a communication cost of the user and a burden of the operator on network resources.

### Brief Description of the Drawings

Fig.1 illustrates a schematic structural diagram of an embodiment of a data synchronization system according to the present disclosure;
Fig.2 illustrates a schematic structural diagram of an embodiment of a terminal according to the present disclosure;
Fig.3 illustrates a schematic structural diagram of an embodiment of a data synchronization server according to the present disclosure;
Fig.4 illustrates a schematic structural diagram of an embodiment of a processing module in the data synchronization server according to the present disclosure;
Fig.5 illustrates a schematic flow chart of uploading data in an embodiment of the data synchronization system according to the present disclosure; and
Fig.6 illustrates a schematic flow chart of downloading data in an embodiment of the data synchronization system according to the present disclosure.

### Detailed Description of the Embodiments

With the present disclosure, a data synchronization server and a content server at the network side completes the task of synchronizing data across mobile terminals. Some user possesses two terminals including a first terminal (an original terminal) and a second terminal (a new terminal). First summary information is for the first terminal, and second summary information is for the second terminal. The present disclosure will be described below in details with reference to the drawings.

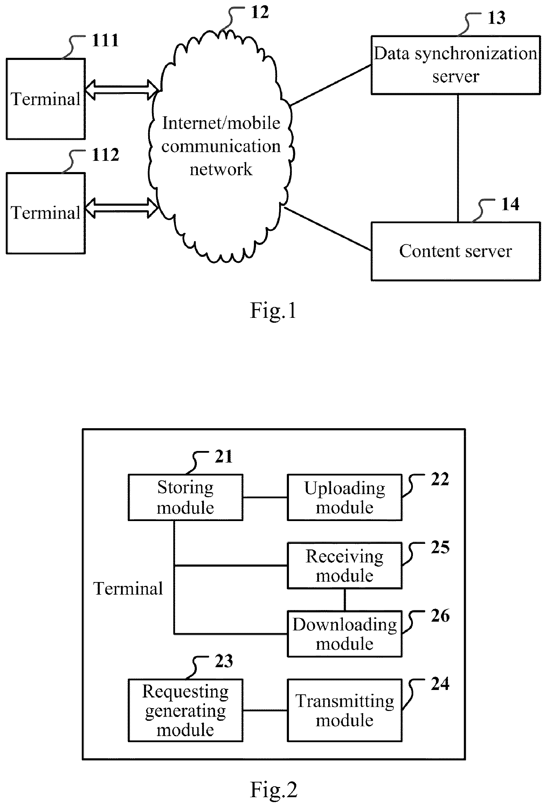

As illustrated in Fig.1, an embodiment of a data synchronization system according to the present disclosure includes multiple terminals 111 and 112, an Internet/mobile communication network 12, a data synchronization server 13, and a content server 14.

The terminal stores the following summary information:
A. Metadata of digital contents (e.g., ring tones, music, videos, applications, theme desktops, etc.), including names, types, formats, digital digests, sources (including the types of the sources: such as being created by a user, being purchased by the user from the network side, etc.; the addresses URLs of the sources: such as URLs at which the contents are purchased and downloaded, etc.), valid periods of time, etc., of the digital contents.
B. Personalized configuration information of the user (e.g., ring tone setting based upon an address book, a music playlist, a game progression, a reading bookmark, etc.): if the setting information includes information related to digital contents, then the identifier ID of the corresponding digital contents is recorded.

After the user downloads digital contents on the terminal, metadata information of the digital contents is generated and recorded. After the user customizes personal setting information on the terminal, corresponding personalized configuration information of the user is recorded. For example, when the user sets some song as a specific ring tone of an incoming call, an association relationship between a group in the address book and the song, etc., are recorded.

There are a number of digital contents in different format stored on the content server.

When the user synchronizes data on the first terminal 111 to the server, the first terminal uploads first summary information to the data synchronization server. The data synchronization server determines whether digital contents corresponding to a source of the digital contents are achieved from the content server, according to the source of the digital contents; and if the digital contents corresponding to the first summary information are achieved from the content server, the first summary information is stored. If the digital contents corresponding to the first summary information are not achieved from the content server, the data synchronization server determines whether the digital contents have been stored, according to the first summary information; and if the digital contents have been stored, the data synchronization server stores storage location information of the digital contents; or if the digital contents have not been stored, the data synchronization server generates and transmits a digital content upload request message to the first terminal, to achieve the digital contents uploaded by the first terminal. The first terminal uploads the corresponding digital contents to the data synchronization server according to the digital content upload request message.

When the user achieves data on the second terminal 112 from the synchronization server, the second terminal transmits an information download request to the data synchronization server and achieves data contents according to second summary information generated by the data synchronization server.

The data synchronization server searches for the first summary information corresponding to the user, according to the information download request, and generates the second summary information corresponding to the second terminal according to the first summary information, and then transmits the second summary information to the second terminal.

If the digital contents corresponding to the first summary information are achieved from the content server, the data synchronization server searches the content server for digital contents that adaptive to the second terminal; and if digital contents adaptive to the second terminal is found on the content server, the data synchronization server achieves a URL of the digital contents adaptive to the second terminal, and generates the second summary information including the URL of the adapted digital contents; and transmits the second summary information to the second terminal. The second terminal then downloads the data contents adaptive thereto from the content server according to the second summary information.

As illustrated in Fig.2, a particular structure of an embodiment of a terminal according to the present disclosure includes a storing module 21 and an uploading module 22.

The storing module stores summary information. The uploading module uploads the summary information, and uploads corresponding digital contents, according to a digital content upload request message transmitted by a data synchronization server.

The terminal further includes a request generating module 23, a transmitting module 24, a receiving module 25, and a downloading module 26. The request generating module generates an information download request. The transmitting module transmits the information download request to the data synchronization server. The receiving module receives the summary information transmitted by the data synchronization server. The downloading module downloads corresponding data contents from the data synchronization server or a content server, according to the summary information transmitted by the data synchronization server.

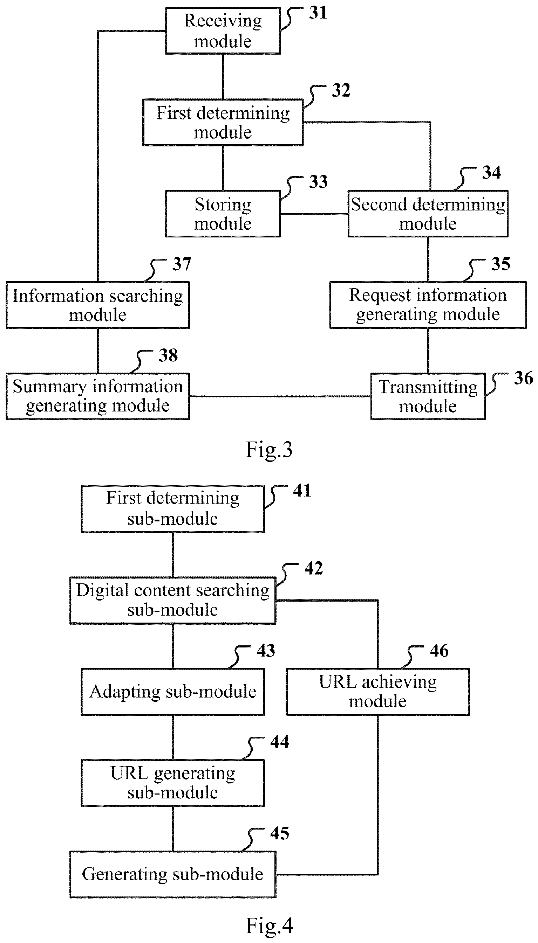

As illustrated in Fig.3, a particular structure of an embodiment of a synchronization server according to the present disclosure includes a receiving module 31, a first determining module 32 and a storing module 33. The receiving module receives first summary information uploaded by a first terminal. The first determining module determines whether digital contents corresponding to the first summary information are achieved from a content server, according to the source of the digital contents. If the digital contents corresponding to the first summary information are achieved from the content server, the storing module stores the first summary information.

The embodiment of the data synchronization server further includes a second determining module 34, a request message generating module 35 and a transmitting module 36. If the digital contents corresponding to the first summary information are not achieved from the content server, the second determining module determines whether the digital contents have been stored, according to the first summary information. If the digital contents have been stored, the storing module stores storage location information of the digital contents. If the digital contents have not been stored, the request message generating module generates a digital content upload request message. The transmitting module transmits the digital content upload request message to the first terminal. The receiving module achieves the digital contents uploaded by the first terminal.

The embodiment of the data synchronization server further includes an information searching module 37 and a summary information generating module 38. The receiving module receives an information download request transmitted by a second terminal. The information searching module searches for the first summary information corresponding to the user, according to the information download request. The summary information generating module generates second summary information from the first summary information. The transmitting module transmits the second summary information to the second terminal.

As illustrated in Fig.4, the summary information generating module particularly includes a first determining sub-module 41, a digital content searching sub-module 42, an adapting sub-module 43, a URL generating sub-module 44, and a generating sub-module 45. The first determining sub-module determines whether the digital contents corresponding to the first summary information are achieved from the content server, according to the first summary information. If the digital contents corresponding to the first summary information are not achieved from the content server, the digital content searching sub-module searches the storing module for the stored digital contents, according to the first summary information. The adapting sub-module performs adaptation process on the digital contents. The URL generating sub-module generates a URL of the adapted digital contents. The generating sub-module generates the second summary information including the URL of the adapted digital contents.

The summary information generating module further includes a URL achieving module 46. If the digital contents corresponding to the first summary information are achieved from the content server, the digital content searching sub-module searches the content server for digital contents adaptive to the second terminal, according to a terminal characteristic parameter and the first summary information. If digital contents adaptive to the second terminal are found on the content server, the URL achieving module achieves a URL of the digital contents adaptive to the second terminal. The generating sub-module generates the second summary information including the URL of the digital contents adaptive to the second terminal.

If no digital contents adaptive to the second terminal are found on the content server, the digital content searching sub-module searches the content server for the digital contents corresponding to the first summary information, according to the first summary information. The adapting sub-module performs adaptation process on the digital contents corresponding to the first summary information. The URL generating sub-module generates a URL of the adapted digital contents. The generating sub-module generates the second summary information including the URL of the adapted digital contents.

The embodiment of the data synchronization method according to the present disclosure generally includes the flow where the user uploads data on the original terminal to the synchronization server, and the flow where the user achieves the data on the new terminal from the synchronization server. These two flows will be described below in details respectively.

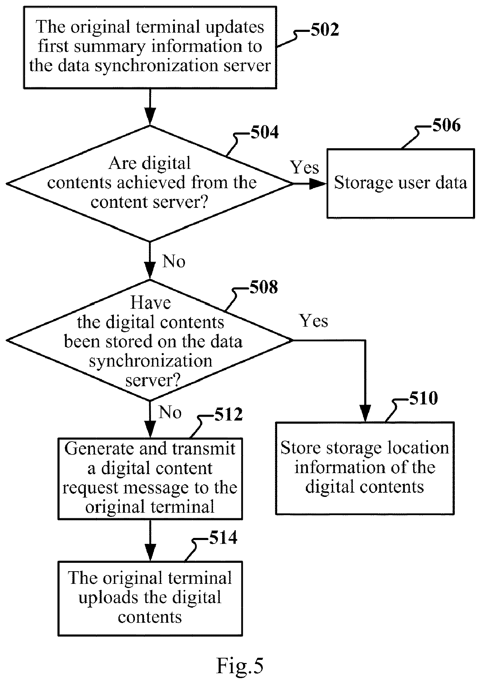

As illustrated in Fig.5, the flow where the user uploads data on the original terminal to the synchronization server includes the following operations:
Operation 502: the original terminal uploads only first summary information to the data synchronization server;
Operation 504: the data synchronization server determines whether digital contents corresponding to the first summary information are achieved from the content server, that is, whether the digital contents specified in metadata of the digital content or personalized configuration information of the user are digital contents purchased or downloaded by the user from the content server at the network side, or digital contents created by the user himself or herself, or digital contents downloaded by the user from a source-unknown server, according to a source of the digital contents; and if digital contents corresponding to the first summary information are achieved from the content server, then the flow proceeds to operation 506; if digital contents corresponding to the first summary information are not achieved from the content server, the flow proceeds to operation 508;
Operation 506: the first summary information is stored without synchronizing the corresponding digital contents;
Operation 508: it is determined whether the digital contents have been stored, according to the first summary information, and if the digital contents have been stored, then the flow proceeds to operation 510; otherwise, the flow proceeds to operation 512;
Operation 510: only storage location information of the digital contents is stored without synchronizing the corresponding digital contents;
Operation 512: a digital content upload request message is generated and transmitted to the original terminal; and
Operation 514: the original terminal uploads the digital contents to the data synchronization server.

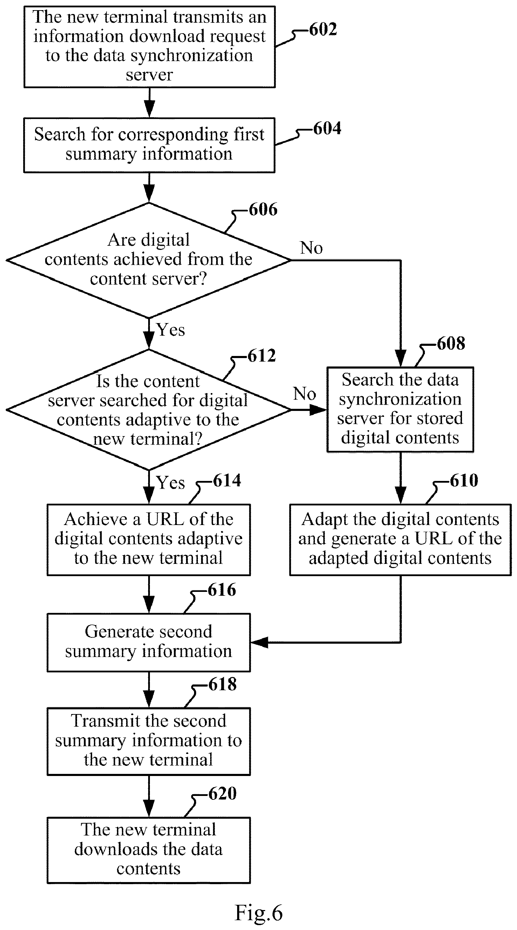

As illustrated in Fig.6, the flow where the user achieves the data on the new terminal from the synchronization server includes the following operations:
Operation 602: the new terminal transmits an information download request including identity information of the user (e.g., a username, a password, a certificate, etc.) and a characteristic parameter of the terminal (e.g., a resolution size, supported music/video/ring tone formats, the type of a player, etc.) to the data synchronization server;
Operation 604: the data synchronization server searches for the first summary information corresponding to the user, according to the identity information of the user;
Operation 606: the data synchronization server determines whether digital contents corresponding to the first summary information are achieved from the content server, according to the first summary information; and if digital contents corresponding to the first summary information are achieved from the content server, then the flow proceeds to the operation 612; otherwise, the flow proceeds to operation 608;
Operation 608: the data synchronization server searches for digital contents stored thereon;
Operation 610: the data synchronization server performs adaptation process on the digital contents, according to the characteristic parameter of the terminal, and generates a URL of the adapted digital contents; and thereafter the flow proceeds to operation 616;
Operation 612: the data synchronization server determines whether to search the content server for digital contents adaptive to the new terminal; and if the data synchronization server searches the content server for digital contents adaptive to the new terminal, then the flow proceeds to the operation 614; otherwise, the flow proceeds to the operation 608;
Operation 614: the data synchronization server achieves a URL of the digital contents adaptive to the new terminal, and thereafter the flow proceeds to the operation 616;
Operation 616: the data synchronization server generates second summary information for the second terminal, according to the achieved URL of the digital contents, that is, sets a source of the digital contents in metadata of the second summary information as the new URL, and replaces an identifier, associated with the digital contents, in the corresponding personalized configuration information of the user;
Operation 618: the data synchronization server transmits the second summary information to the new terminal; and
Operation 620: the new terminal downloads the corresponding digital contents from the data synchronization server or the content server, according to the URL of the digital contents in the second summary information.

The technical solution according to the present disclosure will be described below in two particular examples.

### I. A personalized alarm of an incoming call, and synchronization across terminals based on an address book

The user may set different incoming call alarms (e.g., a tone, video, picture, etc.) on the terminals under one or any combination of the following conditions:
- For a contact or a group in the address book
- For the type of number of an incoming call (e.g., a long-distance call, an international call, a fixed phone, a special service number, etc.)
- A period of time (e.g., 9:00 a.m. to 5:00 p.m. on working days)
- The geographical position where the user is currently located (e.g., at office, at home, out for business, etc.)

A ring tone is downloaded as an added-value music service offered by an operator, so that the user may download his or her favorite music onto his or her mobile terminal and sets the music as his or her own customized ring tone of an incoming call. The user may download and set the ring tone in the following approaches:
- If the calling user hears his or her favorite color ring tone while dialing to the called user with the personalized ring-back tone (polyphonic ringtone), the calling user may request the network for downloading the music onto his or her handset, through the DTMF button, a function key on the communication interface of the handset, or other manners.
- When the user listens to music online on a music Web/WAP website, the user may request for downloading the music onto the handset by operating on the interface.
- When the music is played on the client, the user may request for downloading the music onto the handset by operating on the interface.

In view of the situation where it may be troublesome for the user to download and set an alarm of an incoming call (e.g., a ring tone, video, picture, etc.) and impossible to do this across terminals, the present disclosure provides a method of effective synchronization across terminals based upon an address book, which will be described below in details taking downloading of a ring tone as an example:
1) The user downloads the song "Legend" of Faye WONG as a ring tone on the original Nokia terminal in one of the approaches above (e.g., from the 12530 website) and sets the ring tone as an alarm of an incoming call for the "Workmate" group in the address book, so that the following record of the address book of the terminal is generated in the address book (i.e., digital contents, herein taking the vCard format as an example, X-Ring-ID represents the identifier of the ring tone, which is associated with metadata of the digital contents by LocID): 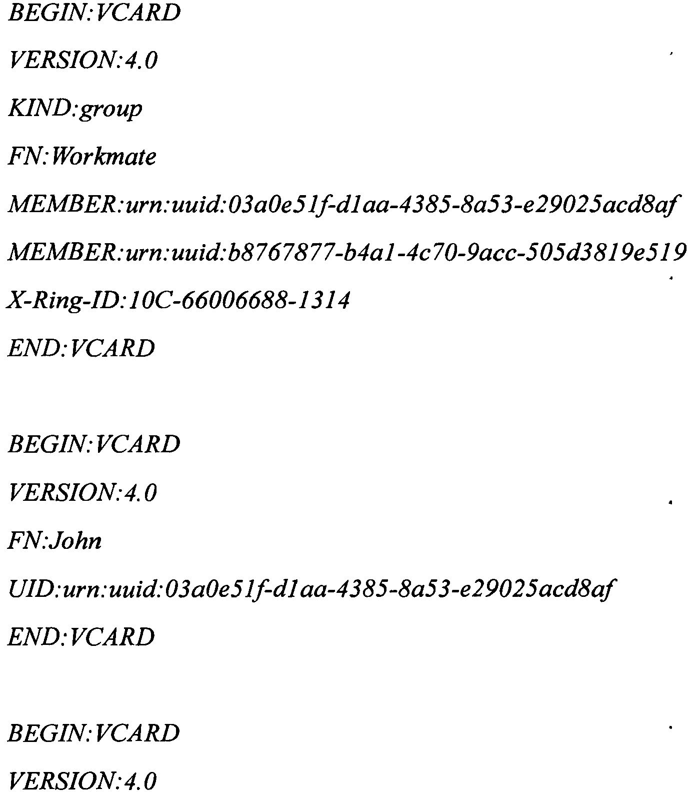 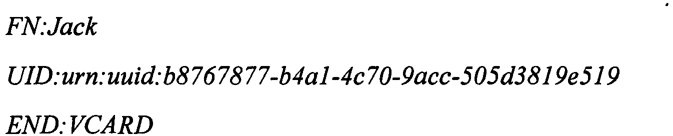 Together with the following record of the metadata of the digital contents (in the xml format, for example) and a corresponding MP3 file, which are associated with the address book by LocID: 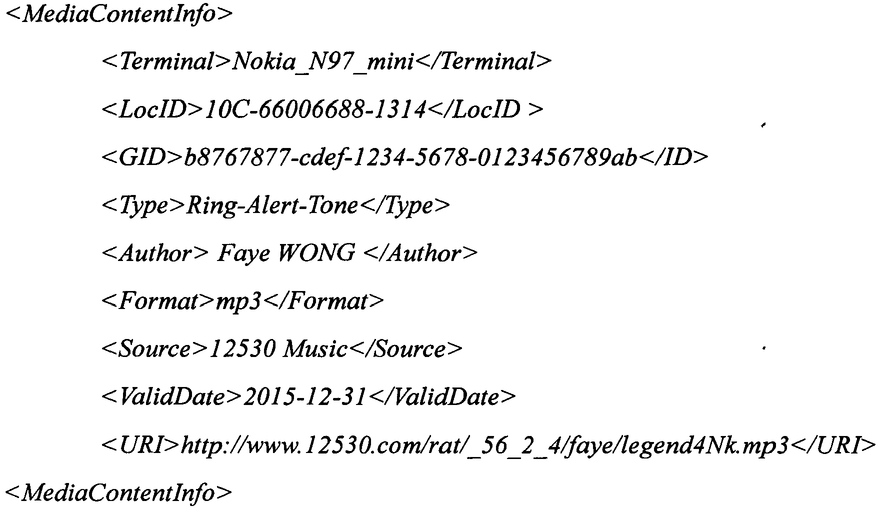
2) The original terminal uploads the address book, and the metadata of the digital contents to the data content synchronization server, according to the requirement of the user or the synchronization request of the network side. Since the media contents in the mp3 format are downloaded by the user from the 12530 website (corresponding to the content server in the present disclosure), the media contents will not be uploaded, to thereby greatly save the amount of data to be communicated by the terminal, so as to lower a communication fee and power consumption of the UE; and
3) When the user uses an iPhone as the new terminal, the user firstly initiates an address book synchronization request to the data synchronization server, and the data synchronization server transmits the address book in the vCard format to the terminal, by carrying the "X-Ring-ID" field therein, to indicate the identifier of the ring tone; and also requests the metadata processing module to process the related media file of the ring tone, so that after the identity and the purchase relationship of the user are confirmed upon successful authentication, the data synchronization server determines that the user has the right of access to the ring tone, searches a database of terminal capability characteristics for a type of ring tone file, supported by the iPhone terminal, being .m4r, and interacts with the content server and then knows that this format of ring tone is not adaptive at the 12530 website, and thus achieves the contents of the ring tone in the mp3 format from the 12530 website, invokes the content adapting module to convert the format, and then rewrites the metadata of the digital contents as follows (the modified sections are highlighted in italics): 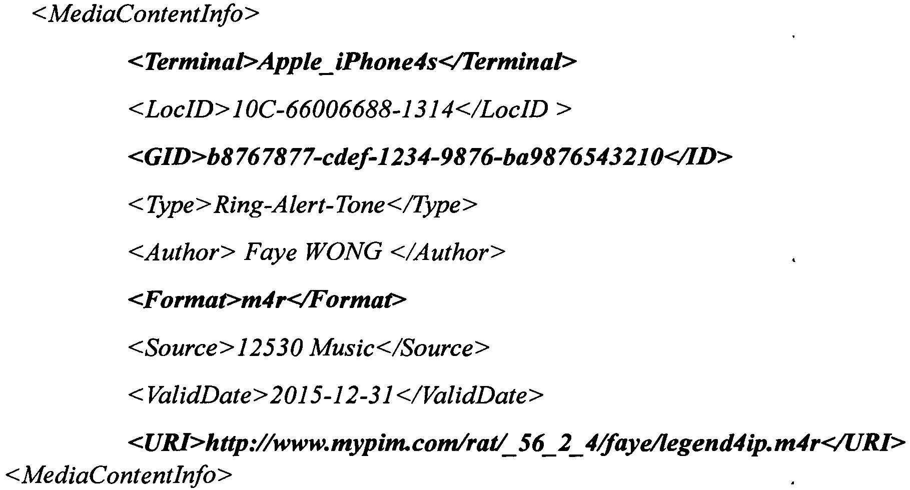
   After the metadata are processed, the data synchronization server transmits the new metadata of the media to the new terminal. The new terminal initiates a request to the specified URL for achieving the contents in the m4r format upon reception of the metadata of the media.
4) After the contents of the media are achieved successfully and stored in a specified location, the address book is scanned again, and a ring tone setting API interface is invoked to set the corresponding ring tone into the specified user group "Workmate". Thus the personalized alarm of an incoming call has been set and synchronized across the terminals based upon the address book.

### II. An application is purchased and migrated across terminals

The user may purchase and download an application at a mobile shopping mall (e.g., Mobile Market, Android Electronic Market, etc.), but the application downloaded by the user typically may not be migrated onto the new terminal when the terminal is replaced, so the present disclosure provides a method of effective migration of an application across terminals:
1) The user purchases and installs a "Chinese Chess Game" based upon the Symbian operating system from a mobile application shop, and then the following record of metadata of the digital contents is generated on the terminal (in the xml format, e.g.): 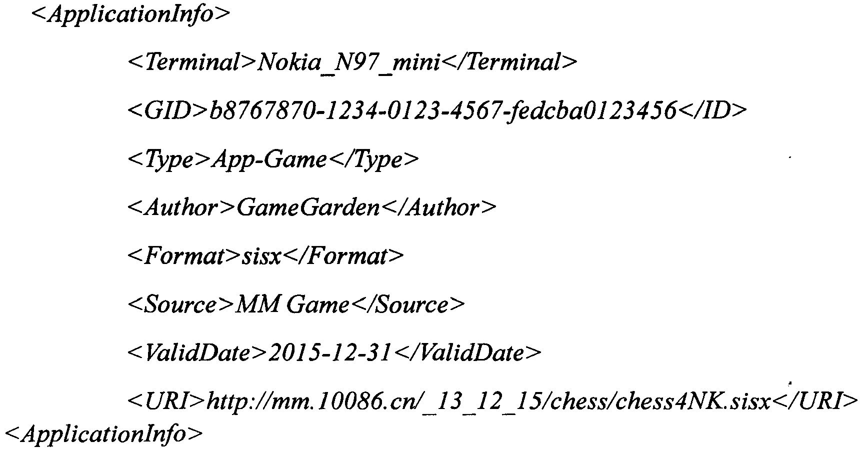
2) The original terminal synchronizes the metadata of the digital contents to the data content synchronization server according to the requirement of the user or the synchronization request of the network side. Since the game application is downloaded by the user from the "mm" website (corresponding to the content server in the present disclosure), the digital contents will not be uploaded, to thereby greatly save the amount of data to be communicated by the terminal, so as to lower a communication fee and power consumption of the terminal; and
3) When the user uses an Android handset as the new terminal, the user firstly initiates an application migration request to the data synchronization server, and the data synchronization server requests the metadata processing module to process the related application, so that after the identity and the purchase relationship of the user are confirmed upon successful authentication, the data synchronization server determines that the user has the right of access to the game application, and since the application in the sisx format may not be installed on Android, the data synchronization server interacts with the content server to achieve the Android version of the game, and then rewrites the metadata of the digital contents as follows (the modified sections are highlighted in italics): 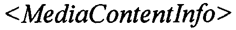 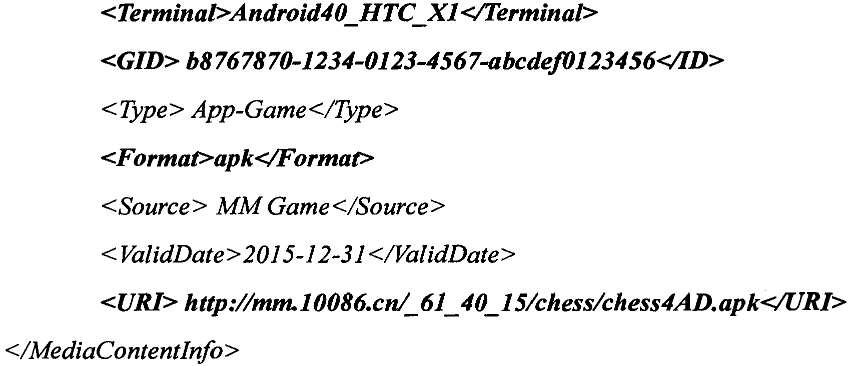
   After the metadata are processed, the data synchronization server transmits the new metadata of the media to the new terminal. The new terminal initiates a request to the specified URL to achieve the application upon reception of the metadata of the media.
4) After the contents of the media are achieved successfully and stored in the specified location, a prompt is given to the user for installation of the application. Thus the application has been migrated across terminals.

With the data synchronization method, the data synchronization server, and the data synchronization system above according to the present disclosure, the metadata of the digital contents are configured, so that the data may be uploaded and downloaded, and it may be determined whether the terminal needs to upload the digital contents to the synchronization server and where the terminal downloads the digital contents, according to the source of the digital contents, to thereby lower the amount of data to be backed up, so as to save a storage space of the synchronization server, to simplify migration of the data when the user replaces the terminal, and to lower a communication cost of the user, and a burden of the operator on network resources.

It is also possible to address the problem of the impossibility to use the digital contents and the personalized configuration information of the user across the terminals, and to avoid the problem of only synchronizing the contents without associating the contents with the function and the characteristic of the terminal in existing cloud storage, so as to automatically adapt the digital contents and the applications when the terminal is replaced, to thereby improve an experience of the service.

It shall be noted that the embodiments above are merely illustrative of but not intended to limit the present disclosure, and any technical solutions and modifications thereof which can occur without departing from the scope of the present disclosure shall fall into the scope of the present disclosure as defined in the accompanying claims.

## Claims

1. A data synchronization method performed by a data synchronization server, comprising:
receiving first summary information uploaded by a first terminal, wherein the first summary information comprises metadata of digital contents, and personalized configuration information of a user, and the metadata of the digital contents comprises a source of the digital contents; and
determining whether the digital contents are achieved from a content server, according to the source of the digital contents, wherein the determining comprises determining whether the digital contents are purchased or downloaded by the user from the content server, and
if the digital contents are achieved from the content server, storing the first summary information;
the method further comprising:
if the digital contents are not achieved from the content server, determining whether the digital contents have been stored, according to the first summary information; and
if the digital contents have been stored, storing storage location information of the digital contents, and
if the digital contents have not been stored, generating and transmitting a digital content uploading request message to the first terminal to achieve the digital contents uploaded by the first terminal, and receiving the corresponding digital contents uploaded by the first terminal, according to the digital content uploading request message;
the method further comprising:
receiving an information download request transmitted by a second terminal, wherein the information download request comprises identity information of the user, and a terminal characteristic parameter of the second terminal;
searching for the first summary information corresponding to the user, according to the information download request; wherein the searching comprises searching for the first summary information corresponding to the user according to the identity information of the user, and
generating second summary information corresponding to the second terminal from the first summary information, and transmitting the second summary information to the second terminal;
wherein generating the second summary information corresponding to the second terminal from the first summary information comprises:
determining whether the digital contents corresponding to the first summary information are achieved from the content server, according to the first summary information; and
(a) if the digital contents corresponding to the first summary information are not achieved from the content server, searching for the stored digital contents according to the first summary information, adapting the digital contents according to the terminal characteristic parameter, and generating a URL of the adapted digital contents, and generating the second summary information comprising the URL of the adapted digital contents;
(b) if the digital contents corresponding to the first summary information are achieved from the content server, searching the content server for digital contents adaptive to the second terminal, according to the terminal characteristic parameter and the first summary information; and
(i) if the digital contents adaptive to the second terminal are found on the content server, achieving a URL of the digital contents adaptive to the second terminal, and generating the second summary information comprising the URL of the digital contents adaptive to the second terminal;
(ii) if the digital contents adaptive to the second terminal are not found on the content server, searching the content server for the digital contents corresponding to the first summary information according to the first summary information, adapting the digital contents corresponding to the first summary information according to the terminal characteristic parameter, generating the URL of the adapted digital contents, and generating the second summary information comprising the URL of the adapted digital contents.

2. A data synchronization server configured to perform the method of claim 1.

3. A data synchronization system, comprising a data synchronization server according to claim 2, the first and second terminals of claim 1 and the content server of claim 1.

## Patentansprüche

1. Datensynchronisationsverfahren, das von einem Datensynchronisationsserver durchgeführt wird, umfassend:
Empfangen erster summarischer Informationen, die von einem ersten Endgerät hochgeladen werden, wobei die ersten summarischen Informationen Metadaten von digitalen Inhalten und personengebundene Konfigurationsinformationen eines Benutzers umfassen und die Metadaten der digitalen Inhalte eine Quelle der digitalen Inhalte umfassen; und
Bestimmen nach Maßgabe der Quelle der digitalen Inhalte, ob die digitalen Inhalte von einem Inhaltsserver erhalten werden, wobei das Bestimmen das Bestimmen umfasst, ob die digitalen Inhalte vom Benutzer von dem Inhaltsserver bezogen oder heruntergeladen werden, und
wenn die digitalen Inhalte von dem Inhaltsserver erhalten werden, Speichern der ersten summarischen Informationen;
wobei das Verfahren ferner umfasst:
wenn die digitalen Inhalte nicht von dem Inhaltsserver erhalten werden, Bestimmen nach Maßgabe der ersten summarischen Informationen, ob die digitalen Inhalte gespeichert wurden; und
wenn die digitalen Inhalte gespeichert wurden, Speichern der Speicherortinformationen der digitalen Inhalte, und
wenn die digitalen Inhalte nicht gespeichert wurden, Erzeugen und Übermitteln einer Nachricht zum Anfordern des Hochladens der digitalen Inhalte an das erste Endgerät, um die vom ersten Endgerät hochgeladenen digitalen Inhalte zu erhalten, und Empfangen der entsprechenden vom ersten Endgerät hochgeladenen digitalen Inhalte nach Maßgabe der Nachricht zum Anfordern des Hochladens der digitalen Inhalte;
wobei das Verfahren ferner umfasst:
Empfangen einer von einem zweiten Endgerät übermittelten Anforderung des Herunterladens von Informationen, wobei die Anforderung des Herunterladens von Informationen Identitätsinformationen des Benutzers und einen für ein Endgerät kennzeichnenden Parameter des zweiten Endgeräts umfasst;
Suchen der dem Benutzer entsprechenden ersten summarischen Informationen nach Maßgabe der Anforderung des Herunterladens von Informationen; wobei das Suchen das Suchen nach den dem Benutzer entsprechenden ersten summarischen Informationen nach Maßgabe der Identitätsinformationen des Benutzers umfasst, und
Erzeugen anhand der ersten summarischen Informationen von dem zweiten Endgerät entsprechenden zweiten summarischen Informationen und Übermitteln der zweiten summarischen Informationen an das zweite Endgerät;
wobei das Erzeugen der dem zweiten Endgerät entsprechenden zweiten summarischen Informationen anhand der ersten summarischen Informationen Folgendes umfasst:
Bestimmen nach Maßgabe der ersten summarischen Informationen, ob die den ersten summarischen Informationen entsprechenden digitalen Inhalte vom Inhaltsserver erhalten werden; und
(a) wenn die den ersten summarischen Informationen entsprechenden digitalen Inhalte nicht vom Inhaltsserver erhalten werden, Suchen der gespeicherten digitalen Inhalte nach Maßgabe der ersten summarischen Informationen, Anpassen der digitalen Inhalte nach Maßgabe des für ein Endgerät kennzeichnenden Parameters und Erzeugen eines URL der angepassten digitalen Inhalte sowie Erzeugen der zweiten summarischen Informationen, die den URL der angepassten digitalen Inhalte umfassen;
(b) wenn die den ersten summarischen Informationen entsprechenden digitalen Inhalte vom Inhaltsserver erhalten werden, Suchen des Inhaltsservers für an das zweite Endgerät anpassungsfähige digitale Inhalte nach Maßgabe des für ein Endgerät kennzeichnenden Parameters und der ersten summarischen Informationen; und
(i) wenn die an das zweite Endgerät anpassungsfähigen digitalen Inhalte auf dem Inhaltsserver gefunden werden, Erhalten eines URL der an das zweite Endgerät anpassungsfähigen digitalen Inhalte und Erzeugen der zweiten summarischen Informationen, die den URL der an das zweite Endgerät anpassungsfähigen digitalen Inhalte umfassen;
(ii) wenn die an das zweite Endgerät anpassungsfähigen digitalen Inhalte nicht auf dem Inhaltsserver gefunden werden, Suchen des Inhaltsservers für die den ersten summarischen Informationen entsprechenden digitalen Inhalte nach Maßgabe der ersten summarischen Informationen, Anpassen der den ersten summarischen Informationen entsprechenden digitalen Inhalte nach Maßgabe des für ein Endgerät kennzeichnenden Parameters, Erzeugen des URL der angepassten digitalen Inhalte und Erzeugen der zweiten summarischen Informationen, die den URL der angepassten digitalen Inhalte umfassen.

2. Datensynchronisationsserver, der zum Durchführen des Verfahrens nach Anspruch 1 eingerichtet ist.

3. Datensynchronisationssystem, das einen Datensynchronisationsserver nach Anspruch 2, die ersten und zweiten Endgeräte von Anspruch 1 und den Inhaltsserver von Anspruch 1 umfasst.

## Revendications

1. Procédé de synchronisation de données mis en œuvre par un serveur de synchronisation de données, comprenant :
la réception de premières informations sommaires téléversées par un premier terminal, dans lequel les premières informations sommaires comprennent des métadonnées de contenus numériques, et des informations de configuration personnalisées d'un utilisateur, et les métadonnées des contenus numériques comprennent une source des contenus numériques ; et
le fait de déterminer si les contenus numériques sont obtenus grâce à un serveur de contenu, selon la source des contenus numériques, dans lequel la détermination comprend le fait de déterminer si les contenus numériques sont achetés ou téléchargés par l'utilisateur depuis le serveur de contenu, et
si les contenus numériques sont obtenus grâce au serveur de contenu, le stockage des premières informations sommaires ;
le procédé comprenant en outre :
si les contenus numériques ne sont pas sont obtenus grâce au serveur de contenu, le fait de déterminer si les contenus numériques ont été stockés, selon les premières informations sommaires ; et
si les contenus numériques ont été stockés, le stockage d'informations d'emplacement de stockage des contenus numériques, et
si les contenus numériques n'ont pas été stockés, la génération et la transmission d'un message de demande de téléversement de contenu numérique au premier terminal pour obtenir les contenus numériques téléversés par le premier terminal, et recevoir les contenus numériques correspondants téléversés par le premier terminal, selon le message de demande de téléversement de contenu numérique ;
le procédé comprenant en outre :
la réception d'une demande de téléchargement d'informations, transmise par un deuxième terminal, dans lequel la demande de téléchargement d'informations comprend des informations d'identité de l'utilisateur, et un paramètre caractéristique de terminal du deuxième terminal ;
la recherche des premières informations sommaires correspondant à l'utilisateur, selon la demande de téléchargement d'informations ; dans lequel la recherche comprend la recherche des premières informations sommaires correspondant à l'utilisateur selon les informations d'identité de l'utilisateur, et
la génération de deuxièmes informations sommaires correspondant au deuxième terminal à partir des premières informations sommaires, et la transmission des deuxièmes informations sommaires au deuxième terminal ;
dans lequel la génération des deuxièmes informations sommaires correspondant au deuxième terminal à partir des premières informations sommaires comprend :
le fait de déterminer si les contenus numériques correspondant aux premières informations sommaires sont obtenus grâce au serveur de contenu, selon les premières informations sommaires ; et
(a) si les contenus numériques correspondant aux premières informations sommaires ne sont pas obtenus grâce au serveur de contenu, la recherche des contenus numériques stockés selon les premières informations sommaires, l'adaptation des contenus numériques selon le paramètre caractéristique de terminal, et la génération d'une URL des contenus numériques adaptés, et la génération des deuxièmes informations sommaires comprenant l'URL des contenus numériques adaptés ;
(b) si les contenus numériques correspondant aux premières informations sommaires sont obtenus grâce au serveur de contenu, la recherche dans le serveur de contenu de contenus numériques adaptés au deuxième terminal, selon le paramètre caractéristique de terminal et les premières informations sommaires ; et
(i) si les contenus numériques adaptés au deuxième terminal sont trouvés sur le serveur de contenu, l'obtention d'une URL des contenus numériques adaptés au deuxième terminal, et la génération des deuxièmes informations sommaires comprenant l'URL des contenus numériques adaptés au deuxième terminal ;
(ii) si les contenus numériques adaptés au deuxième terminal ne sont pas trouvés sur le serveur de contenu, la recherche dans le serveur de contenu de contenus numériques correspondant aux premières informations sommaires selon les premières informations sommaires, l'adaptation des contenus numériques correspondant aux premières informations sommaires selon le paramètre caractéristique de terminal, la génération de l'URL des contenus numériques adaptés, et la génération des deuxièmes informations sommaires comprenant l'URL des contenus numériques adaptés.

2. Serveur de synchronisation de données configuré pour mettre en œuvre le procédé selon la revendication 1.

3. Système de synchronisation de données, comprenant un serveur de synchronisation de données selon la revendication 2, les premier et deuxième terminaux selon la revendication 1 et le serveur de contenu selon la revendication 1.
